# EUROPÄISCHE PATENTSCHRIFT

(11) **EP 1 980 759 B1**
(45) Veröffentlichungstag und Bekanntmachung des Hinweises auf die Patenterteilung: **30.10.2013**
(21) Anmeldenummer: 08007160.8
(22) Anmeldetag: 11.04.2008
(51) Int. Cl.: F16C 1/26

(54) **Modulares Anschlusssystem für Betätigungszüge sowie Verfahren und Fügevorrichtung zu dessen Herstellung**
Modular connection system for control cables as well as method and joining device for its production
Système de raccordement modulaire pour câbles de commande ainsi que procédé et dispositif d'assemblage destinés à sa fabrication

(30) Priorität: 14.04.2007 DE 102007017715
(43) Veröffentlichungstag der Anmeldung: 15.10.2008
(73) Patentinhaber: WR Controls AB, 52302 Timmele (SE)
(72) Erfinder: Clenow, Magnus, 33532 Gnosjö (SE); Klöden, Andreas, Dipl.-Ing., 09599 Freiberg (DE); Scheidling, Matthias, Dipl.-Ing., 09599 Freiberg (DE)
(74) Vertreter: Lüdtke, Frank

(56) Entgegenhaltungen:
- CH-A- 39 829
- DE-A1- 1 777 042
- DE-A1- 19 846 738
- FR-A- 1 207 292
- GB-A- 866 462

## Beschreibung

Die Erfindung betrifft ein modulares Anschlußsystem entsprechend den Merkmalen des ersten Patentanspruches und ein Verfahren zur Herstellung des modularen Anschlußsystems.

Die Erfindung ist überall dort anwendbar, wo Betätigungszüge, vorzugsweise in der Automobilindustrie, miteinander mit einer Halterung des Getriebes oder der Betätigungsvorrichtung verbunden sind, so daß die Kraftübertragung über die Drähte der Längsverseilung erfolgt. Für die Befestigung von Betätigungszügen werden an den beiden Enden Anschlußteile befestigt. Derartige Verbindungen und Befestigungen für Betätigungszüge sind in unterschiedlichsten Ausführungsvarianten bekannt.

So beschreibt DE 198 46 738 A1 ein Anbindungselement für Seilzüge, bestehend aus der Seilzughülle zum Schutz der Seilzugseele und der Übertragung von Bewegungen und Kräften, Längsdrähten zur mechanischen Festigkeit der Kabel, einem Führungsrohr zur Führung der inneren Kabelseele und Gummielementen zu Dämpfung. Das Anbindungselement weist mittig ein Gleitrohr auf, welches in ein entgegenkommendes Führungsrohr mündet, wobei beide Rohrenden von einem elastischen Element umgeben sind, in dem sich die Umspritzung befindet, die die Form eines Halters aufweist. Die umgebogenen Längsdrähte entsprechen der Form der Umspritzung und werden von dieser aufgenommen. Sowohl die Umspritzung als auch das elastische Element weisen eine U-Form auf und sind mit dieser U-Form in den Halter einschiebbar, so daß ihre Position gegenüber dem Fahrzeug festliegt. Die wesentlichen Teile dieses Anbindungselementes sind elastische Kunststoffspritzteile, die einfach und dauerhaft herstellbar sind.

Eine ähnliche Lösung ist in US 6,189,408 B1 beschrieben, wobei zur zusätzlichen Stärkung für höhere Kräfte Verstärkungselemente als äußere Hülle angeordnet sind.

DE 199 46 372 A1 beschreibt einen Schneilbefestiger mit Drehfeder, in den zur einen Seite eine Kabelhülle mit Längsdraht hineinragt und von der anderen Seite ein Führungsrohr, in dessen Mitte sich die nicht gezeigte Seele eines Seilzuges befindet, wobei um Führungsrohr und Kabelhülle ein die beiden Teile verbindender Dämpfungsgummi angeordnet ist und die Längsdrähte der Kabelhülle in abgewinkelter Form zur besseren Haltbarkeit mit einer Umspritzung versehen sind. Mittels Schnellbefestiger, der eine Drehfeder aufweist, sind die Kabel oder Kabelenden schnell und sicher in einem Widerlager befestigbar.

DE 201 15 326 U1 beschreibt einen Schnellbefestiger für das Befestigen und schwingungsgedämpfte Lagern von Seilzügen. Der Schnellbefestiger besteht aus dem Haltering mit einer Feder, dem Pendelrohr und den Kabelbauteilen. Er zeichnet sich dadurch aus, daß eine Hartkomponente aus der Seilzughüfle von der einen Seite und einen Einlaufschutz mit einem Pendelrohr von der anderen Seite aufnimmt, wobei die Hartkomponente von einer Weichkomponente umgeben ist, auf der ein Schiebering mit einem Haltering mit einer Feder angeordnet ist und die Feder an einer Seite gegen die Weichkomponente und zur anderen Seite gegen den Haltering wirkt. Die Herstellung des Schnellbefestigers erfolgt im Spritzgußverfahren, wobei die metallische Längsverseilung in abgewinkelter Weise in die Hartkomponente eingegossen ist.

In DE 197 02 777 A1 ist ein Anschlußteil für einen Befestigungszug beschrieben, der ein formschlüssiges elastisches Kopplungselement aufweist, wobei ein Kopfstück in ein Befestigungsteil einbringbar ist und die Längsverseilung abgewinkelt in eine Muffe eingegossen wurde. Das Anschlußteil besteht aus mehreren Teilen, die im Spritzgußverfahren hergestellt und anschließend zusammengefügt werden.

Um Anbindungselemente oder Anschlußteile fest mit der Betätigungshülle zu verbinden, besteht weiterhin die Möglichkeit, diese teilweise aus Metall auszuführen und mittels Druck auf die Betätigungshülle zu verpressen. Das hat allerdings den Nachteil, daß es zu einer Verringerung des Durchmessers der Betätigungshülle kommt und der Durchmesser zwischen Betätigungshülle und der Seele des Seilzuges geringer wird oder es gar zu Reibung zwischen der Seele und dem Führungsrohr kommt. Es ist mit dieser Ausführung keine Möglichkeit gegeben, sehr große Kräfte aufzunehmen. Sofern die Verbindung hohen Temperaturen ausgesetzt wird, ist eine dauerhafte Haltbarkeit trotz der Tatsache gefährdet, daß eine Reibung zwischen der Seele des Seilzuges und dem Führungsrohr in Kauf genommen wird.

In EP 0 556 950 B1 ist ein Fernsteuerungszusammenbau mit Kabelrohr-Befestigungsvorrichtung beschreiben, bei dem eine Anschlußhülse auf die innere Hülse einer Betätigungshülle geschoben wird und dadurch die Längsverseilung aufweitet. Über die aufgeweitete Längsverseilung und die innere Hülse wird eine äußere Hülse geschoben, so daß die aufgeweitete Längsverseilung zwischen beiden Teilen verpreßt wird. Auch derartige Konstruktionen können nur geringere Kräfte aufnehmen. Sofern höhere Kräfte auftreten, werden beiden Hülsen von der Längsverseilung abgerissen. FR 1 207 292 A offenbart ein modulares Anschlußsystem für Betätigungszüge, insbesondere für Betätigungszüge in der Automobilindustrie, bestehend aus dem Führungsrohr mit der Längsverseilung, wobei die Längsverseilung mittels eines zu einem Ende keilförmig ausgebildeten Einlaufschutzes zwischen dem Führungsrohr und einem Gegenlager aufgebogen wird und die Enden der Längsverseilung mittels eines Befestigungsteils gegenüber dem Gegenlager umgebogen oder verpreßt werden und das Befestigungsteil oder das Gegenlager mit dem jeweils anderen Teil eine Überlappung bildet. Bei dem modularen Anschlußsystem für Betätigungszüge handelt es sich nicht um ein modulares Anschlußsystem für Betätigungszüge, die eine äußere Schutzhülle aufweisen. Weiterhin werden die Drähte der Längsverseilung lediglich in einem spitzen Winkel aufgebogen, so daß sehr hohe Kräfte zwischen den keilförmigen Ringen und der Längsverseilung wirken müssen, damit bei hohen Abzugskräften kein Ausreißen der Hülle des Betätigungszuges erfolgt. Das Verpressen kann mittels der Kraft erfolgen, die durch das Zusammendrehen von Innen- und Außengewinde der Lager erzeugt wird, wobei zu hohe Kräfte ein Beschädigen der Längsverseilung zur Folge haben können, was zu einem Ausreißen der Verbindung führen kann.

Alle vorgeschlagenen Lösungen dienen dazu, Betätigungszüge so auszuführen, daß sie unkompliziert und sicher mit einem Teil, beispielsweise der Karosserie eines Kraftfahrzeuges verbunden werden können oder aber nach einfacher unkomplizierter Herstellung miteinander verbindbar sind. Die genannten und beschriebenen Anbindungselemente oder Anschlußteile sind in der Regel aus Kunststoff oder Metall und geeignet, Betätigungshüllen oder Betätigungszüge mit einem Karosserieteil oder etwas Ähnlichem zu verbinden, wenn geringe Anforderungen an Einsatztemperatur und die herrschenden Einsatzkräfte gestellt werden.

Nachteilig ist hierbei, daß die Verwendung des Kunststoffes gegenüber metallischen Werkstoffen wie Stahl oder Aluminium nur geringere Einsatztemperaturen erlauben. Weiterhin sind die Kraft, die diese Elemente einem Ausreißen der Betätigungshülle aus den angespritzten oder angepreßten Anschlußteilen entgegensetzten sowie die ertragbare Kraft an den Anschlußteilen aufgrund der geringen Festigkeit der Kunststoffspritzung gegenüber den Metallteilen relativ gering. Damit sind die beschriebenen Teile dann nicht einsetzbar, wenn höhere Kräfte wirken oder ganz bestimmte Einsatztemperaturen vorhanden sind. Alle Verbindungselemente im Zusammenhang mit Kunststoff können ein Betätigungsspiel zwischen den zu verbindenden Teilen aufweisen.

Es ist daher Aufgabe der Erfindung, ein Anschlußsystem für das Verbinden von Betätigungszügen mit einer äußeren Schutzhülle zu entwickeln, die eine hohe mechanische und thermische Belastbarkeit aufweisen, wobei ein minimales Betätigungsspiel zwischen den zu verbindenden Teilen auftreten soll.

Diese Aufgabe wird durch eine Vorrichtung nach den Merkmalen des ersten Patentanspruches und ein Verfahren zum Herstellen eines modularen Anschlußsystems gelöst.

Unteransprüche geben vorteilhafte Ausgestaltungen der Erfindung wieder. Die erfindungsgemäße Lösung sieht ein modulares Anschlußsystem zum Verbinden von Betätigungszügen, insbesondere für Betätigungszüge in der Autoindustrie, vor, welches aus der Betätigungshülle mit dem Führungsrohr, der mechanischen Längsverseilung, der äußeren Schutzhülle und der im Führungsrohr liegenden Seele sowie den Anschlußteilen zum Verbinden der Betätigungszüge besteht, wobei zum Befestigen der Betätigungshülle die Drähte der Längsverseilung auf ein auf die Betätigungshülle aufgestecktes Befestigungsteil form- oder stoffschlüssig verpreßt werden. Dabei wirkt ein Gegenlager gegen das Befestigungsteil. Die Formen von Gegenlager und Befestigungsteil mit den verformten Drähten der Längsverseilung entsprechen einander und wirken gegeneinander. Das Gegenlager umgibt die äußere Schutzhülle des Betätigungszuges. Dazu weist das Gegenlager die erforderliche Länge auf. In seinem dem Befestigungsteil zugewandten Bereich liegt die Längsverseilung durch den Druck der Kontur am Befestigungsteil an. Die Kontur hat allerdings nicht die Funktion, die Längsverseilung gegenüber dem Gegenlager zu verpressen, sondern nur die, die Längsverseilung aufzuweiten. Daher kann die Kontur auf Kunststoff bestehen. Die Kontur kann vorteilhafterweise als Einlegeteil ausgebildet sein, wobei es zu einer Seite das Pendelrohr enthalten kann. Die Kontur spreizt mit ihrer Keilform die Längsverseilung auf und hält diese gegenüber dem Gegenlager aufgespreizt. Kontur und Einlaufschutz können aus einem einzigen Teil bestehen. Der Einlaufschutz oder die Kontur für das Pendelrohr kann allerdings auch ein separates Einlegeteil darstellen welches vom Gegenlager formschlüssig umschlossen und gehalten wird und erforderlichenfalls aus einem anderen Material bestehen.

Die Gegenkraft, die ein Abreißen des Befestigungsteils verhindern, wird dadurch erreicht, daß die Längsverseilung nicht nur aufgeweitet wird, sondern umgebogen und in umgebogenem Zustand zwischen dem Gegenlager und dem Befestigungsteil verpreßt ist. Sofern geringere Kräfte, beispielsweise 5.000 N zu halten sind, genügt ein Verpressen des umgebogenen Seilzuges zwischen Gegenlager und Befestigungsteil, wobei eine Überlappung zumindest eines Teiles gegenüber dem anderen erforderlich ist, so daß hohe Preßkräfte zwischen den Stirnseiten beider Teile realisierbar sind.

Es ist vorteilhaft, wenn das Befestigungsteil und das Gegenlager aus Metall bestehen. Dabei kann das gleiche Metall verwendet werden wie für die Längsverseilung. In einem derartigen Fall sind Längsverseilung und Befestigungsteil miteinander form- und kraftschlüssig verbindbar, was durch das Umformen mittels Werkzeug möglich ist, so daß eine Überlappung zwischen Befestigungsteil und Gegenlager entsteht.

Das Umformen ist mittels Umwalzen oder einer Umformvorrichtung möglich. Das kann als Umwalzen mittels einer umlaufenden Walze erfolgen, Vorteilhaft ist es aber auch, den Umformvorgang mittels eines Stempels auszuführen. Die Drähte der Längsverseilung können weniger als 90 Grad gebogen sein, wenn geringe Zugkräfte wirken.

Sollte eine höhere mechanische Belastbarkeit erforderlich sein, beispielsweise 10.000 N, so wird eine platzsparende Anordnung erreicht, indem die Längsverseilung mehr als 90 Grad gebogen und befestigt wird. Gerade ein Umbiegen der Drähte der Längsverseilung über 90 Grad schafft eine umlaufende Hakenform des Drahtes zusätzlich zur kraft- und formschlüssigen Verbindung von Befestigungsteil und Gegenlager. Diese umlaufende Hakenform sichert zusätzliche Spielfreiheit, erhöht die Verbindungsfläche und nimmt formbedingt höhere Zug- und Druckkraft auf als andere Verbindungen. Die metallischen Teile werden formschlüssige durch Umformen, z. B. Umbördeln, ineinander gefügt. Zwischen Gegenlager, Längsverseilung und Befestigungsteil besteht eine form- und kraftschlüssige Verbindung ohne Betätigungsspiel, da zwischen Gegenlager und Befestigungsteil die Drähte der Längsverseilung fest verpreßt sind, so daß die Längsverseilung Zug- und Druckkräfte aufnehmen kann.

In einer besonderen Ausführungsvariante ist es vorteilhaft, zwischen dem Befestigungsteil und dem Gegenlager ein Dichtelement anzuordnen.

Vorteilhaft kann es weiterhin sein, das modulare Anschlußsystem zusätzlich mit einer äußeren Dämpfungseinrichtung zu versehen. Dazu wird ein Dämpfungselement zwischen das Gegenlager und das Befestigungsteil eingebracht.

Zum Herstellen des modularen Anschlußsystems gibt es unterschiedliche Möglichkeiten. Als vorteilhaft hat sich ein zweistufiger Füge- und Umformvorgang erwiesen. Zum einen ein Umformen und Fügen beim Verpressen des Gegenlagers mit dem Befestigungsteil und zum anderen ein Fügen und Umformen beim Umbiegen der Überlappung von Gegenlager und Befestigungsteil. Gegenlager und Befestigungsteil übernehmen die eigentliche Tragfunktion und Ausreißfestigkeit des Seilzuges. Bei diesem Vorgang werden die Längsdrähte form- und kraftschlüssig zwischen dem Gegenlager und dem Befestigungsteil verpreßt. Die Überlappung wird mittels einer Fügevorrichtung hergestellt, die aus einem äußeren und einem inneren Stempel bestehen, wobei der innere Stempel eine Feder aufweist. Der innere Stempel, der einen geringeren Durchmesser aufweist, preßt das Befestigungsteil mit der innenliegenden Kontur oder dem Einlaufschutz über das Führungsrohr, so daß die Längsverseilung auf das Gegenlager gedrückt und an diesem mittels der Kraft der Feder festgehalten wird. Auf der anderen Seite des modularen Anschlußsystems dient ein Gegenlager der Fügevorrichtung dazu, Gegendruck zu erzeugen. Während der innere Stempel auf das Befestigungsteil drückt, welches die umgebogene Längsverseilung auf dem Gegenlager festhält, fährt ein äußerer Stempel der Fügevorrichtung auf die Enden des Gegenlagers oder des Befestigungsteils und stellt die Überlappung her, die gewährleistet, daß beide Teile miteinander verbunden sind und mit der erforderlichen Kraft die Längsverseilung zwischen beiden Teilen festhält. Die erforderliche Kraft ist durch die Federkraft des inneren Stempels einstellbar.

Das erfindungsgemäße System hat den Vorteil, daß eine Betätigungshülle und ein Gegenstück. z. B. ein Pendelrohr auch dann sicher und spielfrei miteinander verbindbar sind, wenn ungünstige Temperaturen und hohe Kräfte wirken, so daß herkömmliche Verbindungen nicht mehr einsetzbar sind.

Das modulare Anschlußsystem für Betätigungszüge wird in der Weise hergestellt, daß zunächst ein Abisolieren der Betätigungszughülle über eine vorgegebene Länge erfolgt, bis die Längsverseilung erreicht ist. Nach diesem Abisolieren wird das Gegenlager auf die Betätigungszughülle geschoben und ggf. zur Seilzughülle abgedichtet. Danach werden die freien Enden der Längsverseilung angebogen oder gespreizt. Danach erfolgt ein Umbiegen der Längsdrähte oder der Seilzughülle mit dem Befestigungsteil auf die Kontur des Gegenlagers. Dabei werden die Längsdrähte auf die Kontur des Gegenlagers umgeformt. Sofern die Verbindung noch höhere Kräfte aufnehmen muß, wird ein anders geformtes Gegenlager eingesetzt, welches erlaubt, die Längsverseilung über 90 Grad aufzubiegen. Nachdem das Aufbiegen und die Verbindung mit dem Gegenlager erfolgt ist, wird die aufspreizende Kontur als Einlegeteil oder gleichzeitig mit dem Befestigungsteil gegenüber dem Gegenlager eingebracht und beide formschlüssig miteinander verbunden. Diese formschlüssige Verbindung erfolgt durch das Überlappen von Befestigungsteil oder dem Gegenlager über das jeweils andere Teil. Damit ist eine haltbare form- und kraftschlüssige Verbindung zwischen den Teilen hergestellt.

Im Folgenden wir das modulare Anschlußsystem an fünf Figuren und einem Ausführungsbeispiel näher erläutert.
Die Figuren zeigen:
- Figur 1:: Modulares Anschlußsystem zum Verbinden von Betätigungszügen, bei dem die Längsverseilung weniger als 90 Grad aufgebogen ist.
- Figur 2:: Modulares Anschlußsystem zum Verbinden von Betätigungszügen, bei dem die Längsverseilung mehr als 90 Grad aufgebogen ist und das Befestigungsteil eine Überlappung um das Gegenlager aufweist.
- Figur 3:: Modulares Anschlußsystem zum Verbinden von Betätigungszügen, bei dem die Längsverseilung mehr als 90 Grad aufgebogen ist und das Gegenlager eine Überlappung um das Befestigungsteil aufweist und eine Dichtung zwischen Befestigungsteil und Widerlager.
- Figur 4:: Fügevorrichtung zum Aufbringen des Befestigungsteils und Herstellen einer Überlappung am Befestigungsteil.
- Figur 5:: Fügevorrichtung zum Aufbringen eines Befestigungsteils und Herstellen einer Überlappung am Gegenlager.

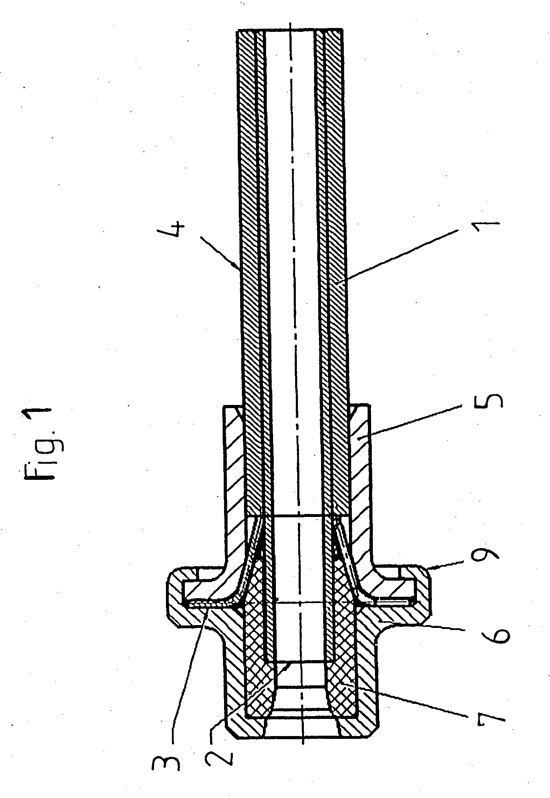

Die *Figur 1* zeigt das modulare Anschlußsystem, bei dem auf die Betätigungshülle 1, die aus der äußeren Schutzhülle 4 und dem Führungsrohr 2 besteht, ein Gegenlager 5 aufgeschoben wurde, welches nicht auf die äußere Schutzhülle 4 verpreßt ist. Von der linken Seite wurde zwischen dem Führungsrohr 2 und der Längsverseilung 3 der Einlaufschutz 7, der eine keilförmige Kontur darstellt, eingeschoben, so daß die Längsverseilung 3 über den Umfang des Gegenlagers 5 aufgespreizt wird, so daß es vom Befestigungsteil 6 gegen das Gegenlager 5 gedrückt wird. Damit eine unlösbare Verbindung entsteht, bilden die Enden des Befestigungsteils 6 mit dem Gegenlager 5 die Überlappung 9. Sowohl das Gegenlager 5 als auch das Befestigungsteil 6 sind im vorliegenden Fall aus Metall, so daß die vorliegende Verbindung hohe Kräfte aufnehmen kann und gegen hohe Temperaturen unempfindlich ist.

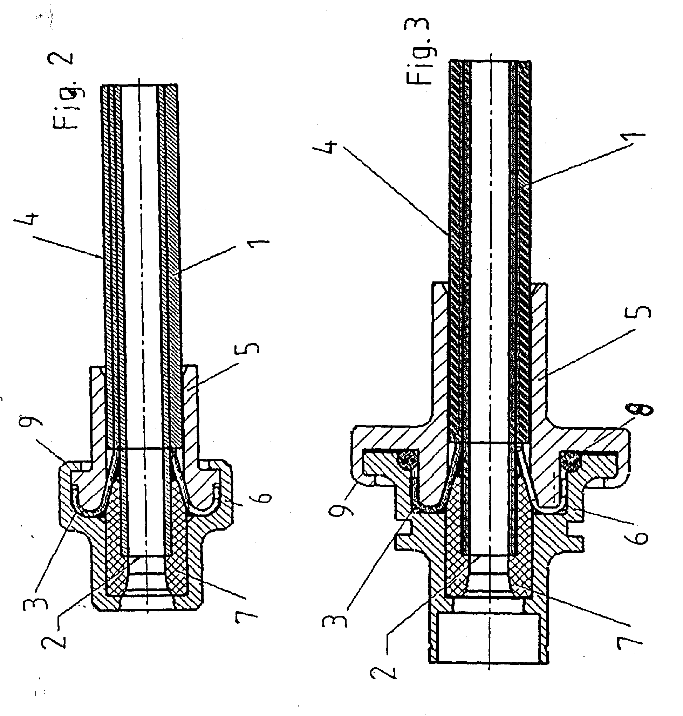

Die *Figur 2* zeigt eine Ausführung, bei der die Längsverseilung 3 mit einem Winkel über 90 ° aufgebogen und zwischen Befestigungsteil 6 und Gegenlager 5 festgehalten wird, wobei im vorliegenden Fall auch eine Überlappung 9 mit dem Befestigungsteil 6 gebildet wird.

Die *Figur 3* zeigt ein Ausführungsbeispiel, bei dem das Befestigungsteil 6 eine Rille für eine Befestigung an der Karosserie aufweist und zwischen Befestigungsteil 6 und dem Gegenlager 5 eine Dichtung 8 eingebracht wurde. Weiterhin ist die Überlappung 9 aus dem Rand des Gegenlagers 5 geformt, welches über das Befestigungsteil 6 ragt.

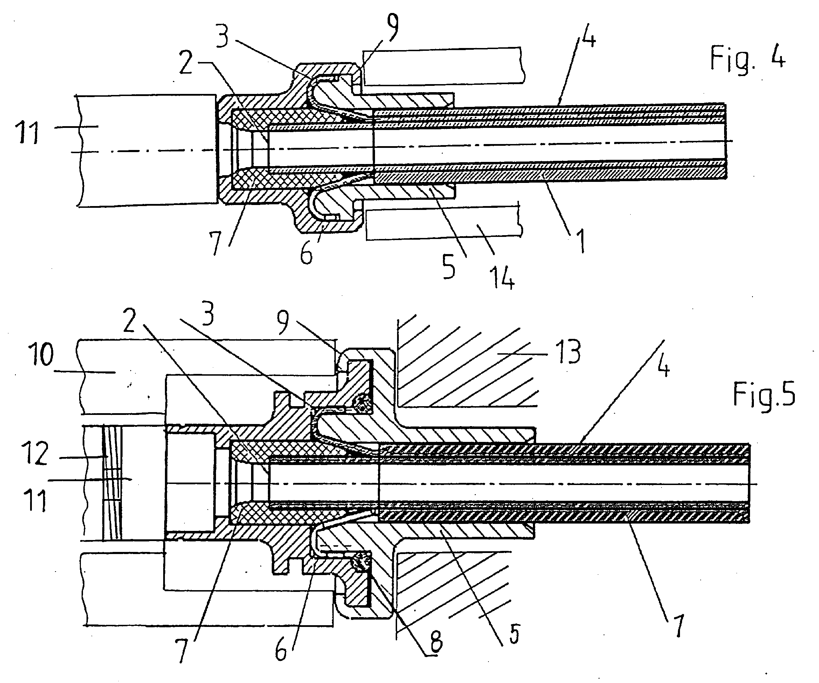

Die *Figur 4* zeigt das Teil aus Figur 2 im Zusammenhang mit der Fügeinrichtung, deren innerer Stempel 11 dazu dient, in einem ersten Bearbeitungsschritt den Einlaufschutz 7 das darüber befindliche Befestigungsteil 6 zwischen das Führungsrohr 2 und das Gegenlager 5 aufzuschieben, wobei die Längsverseilung 3 abgewinkelt wird. Das Befestigungsteil 6 stabilisiert die weitere Biegearbeit. Danach wird das Gegenlager 5 aufgepreßt. In einem weiteren Verfahrensschritt wird durch einen äußeren Stempel 14, der entgegen dem inneren Stempel 11 wirkt, die Überlappung der Bördelung 9 hergestellt.

Die *Figur 5* zeigt das modulare Anschlußsystem in einem Gegenlager 13 der Fügevorrichtung, wobei der innere Stempel 11 der Fügevorrichtung 12 mit einer Feder den Einlaufschutz 7 und das Befestigungsteil 6 auf das Führungsrohr 2, die Längsverseilung 3 und das Gegenlager 5 aufbringt. Nachdem die Endposition erreicht ist, drückt der innere Stempel 11 federbelastet die vorhandene Verbindung zwischen Befestigungsteil 6 und Gegenlager 5, während der äußere Stempel 10 der Fügevorrichtung 12 die Überlappung 9 ausbildet.

### Liste der verwendeten Bezugszeichen

- 1: Betätigungshülle
- 2: Führungsrohr
- 3: Längsverseilung
- 4: Äußere Schutzhülle
- 5: Gegenlager
- 6: Befestigungsteil
- 7: Einlaufschutz / Kontur
- 8: Dichtung
- 9: Überlappung, Bördelung
- 10: äußerer Stempel der Fügevorrichtung
- 11: innerer Stempel der Fügevorrichtung
- 12: Feder der Fügevorrichtung
- 13: Gegenlager der Fügevorrichtung
- 14: Äußerer Stempel der Fügevorrichtung, der entgegen dem inneren Stempel wirkt

## Patentansprüche

1. Modulares Anschlußsystem für Betätigungszüge, insbesondere für Betätigungszüge in der Automobilindustrie, bestehend aus einer Betätigungshülle (1) mit einem Führungsrohr (2), einer Längsverseilung (3) und einer äußeren Schutzhülle (4), wobei
- die Längsverseilung (3) mittels eines keilförmig ausgebildeten Ende eines Einlaufschutzes (7) zwischen dem Führungsrohr (2) und einem die äußere Schutzhülle (4) umgebenden Gegenlager (5) aufgebogen ist,
- die Enden der Längsverseilung (3) mittels eine Befestigungteil (6) gegenüber dem Gegenlager (5) über 90 Grad umgebogen und zwischen dem Befestigungsteil (6) und dem Gegenlager (5) verpreßt sind und
- das Befestigungsteil (6) oder das Gegenlager (5) mit dem jeweils anderen Teil (5, 6) eine Überlappung (9) bildet.

2. Modulares Anschlußsystem nach Anspruch 1, **dadurch gekennzeichnet, daß** der Einlaufschutz (7) ein Kunststoffteil darstellt.

3. Modulares Anschlußsystem nach Anspruch 1, **dadurch gekennzeichnet, daß** das Befestigungsteil (6) und das Gegenlager (5) aus Metall bestehen.

4. Modulares Anschlußsystem nach Anspruch 1, **dadurch gekennzeichnet, daß** zwischen dem Gegenlager (5) und dem Befestigungsteil (6) eine Dichtung (8) angeordnet ist.

5. Modulares Anschlußsystem nach Anspruch 1, **dadurch gekennzeichnet, daß** Einlaufschutz (7) und Befestigungsteil (6) eine Einheit darstellen.

6. Verfahren zum Herstellen eines modularen Anschlußsystems nach Anspruch 1, **gekennzeichnet, durch**
- Abisolierung der Betätigungshülle (1) über eine vorgegebene Länge bis die Längsverseilung (3) erreicht ist,
- Aufschieben des Gegenlagers (5) bis zu einem vorgegebenen Punkt über die Betätigungshülle (1),
- gegebenenfalls ein Fixieren und Ablösen der Längsverseilung (3) vom Führungsrohr (2),
- Aufschieben des Einlaufschutzes (7) und des Befestigungsteils (6) auf das Führungsrohr (2), bis die Längsverseilung (3) fest auf dem Gegenlager (5) aufliegt und unter Beibehaltung des Druckes auf das Befestigungsteil (6) formschlüssiges Herstellen der Überlappung (9) zwischen Befestigungsteil (6) und Gegenlager (5).

7. Verfahren nach Anspruch 6, **dadurch gekennzeichnet, daß** das Aufschieben von Einlaufschutz (7) und Befestigungsteil (6) mittels eines federnden Stempels (11) vorgenommen wird, der gegen ein Gegenlager (5) wirkt, von welchem das modulare Anschlußsystem gehalten wird.

8. Verfahren nach Anspruch 7, **dadurch gekennzeichnet, daß** die Überlappung (9) mittels einer äußeren Fügevorrichtung (10) hergestellt wird und gegen das Befestigungsteil (6) oder gegen das Gegenlager (5) wirkt.

## Claims

1. A modular connection system for control cables, more specifically for control cables in the automotive industry, consisting of an actuating sleeve (1) with a guide tube (2), a longitudinal stranding (3) and an external protection sleeve (4), wherein
- the longitudinal stranding (3) is bent open by means of a wedge-shaped end of an inlet guard (7) between the guide tube (2) and a counter-bearing (5) surrounding the external protection sleeve (4),
- the ends of the longitudinal stranding (3) are bent at 90 degrees by means of a fastening part (6) relative to the counter-bearing (5) and pressed together and
- the fastening part (6) or the counter-bearing (5) form an overlap (9) with the respective other part (5, 6).

2. The modular connection system according to claim 1, **characterized in that** the inlet guard (7) is a plastic part.

3. The modular connection system according to claim 1, **characterized in that** the fastening part (6) and the counter-bearing (5) are made of metal.

4. The modular connection system according to claim 1, **characterized in that** a seal (8) is disposed between the counter-bearing (5) and the fastening part (6).

5. The modular connection system according to claim 1, **characterized in that** the inlet guard (7) and the fastening part (6) form a unit.

6. A method for manufacturing a modular connection system according to claim 1, **characterized by**
- skinning the actuating sleeve (1) along a pre-determined length until the longitudinal stranding (3) is reached,
- sliding the counter-bearing (5) onto the actuating sleeve (1) up to a pre-determined point,
- if necessary, fixing and detaching the longitudinal stranding (3) from the guide tube (2),
- sliding the inlet guard (7) and the fastening part (6) onto the guide tube (2) until the longitudinal stranding (3) firmly rests on the counter-bearing (5) and, while maintaining the pressure on the fastening part (6), creating the positive-fit overlap (9) between the fastening part (6) and the counter-bearing (5).

7. The method according to claim 6, **characterized in that** sliding on the inlet guard (7) and the fastening part (6) is implemented by means of a resilient stamp (11) acting against a counter-bearing (5) by which the modular connection system is held.

8. The method according to claim 7, **characterized in that** the overlap (9) is manufactured by means of an outer joining device (10) and acts against the fastening part (6) or against the counter-bearing (5).

## Revendications

1. Système de connexion modulaire pour des toronnages de commande, notamment pour des toronnages de commande dans l'industrie automobile, composé d'une gaine de commande (1) avec un tube de guidage (2), un toronnage longitudinal (3) et une gaine de protection (4) extérieure, où
- le toronnage longitudinal (3) est ouvert au moyen d'une extrémité en forme de coin d'une protection d'entrée (7) entre le tube de guidage (2) et une butée (5) entourant la gaine de protection (4) extérieure,
- les extrémités du toronnage longitudinal (3) sont recourbées de 90° par rapport à la butée (5) au moyen d'une partie de fixation (6) et pressées et
- la partie de fixation (6) ou la butée (5) forment un chevauchement (9) avec l'autre partie respective (5, 6).

2. Système de connexion modulaire selon la revendication 1, **caractérisé en ce que** la protection d'entrée (7) est une partie en plastique.

3. Système de connexion modulaire selon la revendication 1, **caractérisé en ce que** la partie de fixation (6) et la butée (5) sont en métal.

4. Système de connexion modulaire selon la revendication 1, **caractérisé en ce qu'**un joint (8) est disposé entre la butée (5) et la partie de fixation (6).

5. Système de connexion modulaire selon la revendication 1, **caractérisé en ce que** la protection d'entrée (7) et la partie de fixation (6) forment une unité.

6. Méthode pour fabriquer un système de connexion de modulaire selon la revendication 1, **caractérisée par**
- le dénudage de la gaine de commande (1) sur une longueur prédéterminée jusqu'à atteindre le toronnage longitudinal (3),
- l'enfilage de la butée (5) sur la gaine de commande (1) jusqu'en un point prédéterminé,
- le cas échéant, la fixation et le détachement du toronnage longitudinal (3) du tube de guidage (2),
- l'enfilage de la protection d'entrée (7) et de la partie de fixation (6) sur le tube de guidage (2) jusqu'à ce que le toronnage longitudinal (3) repose fermement sur la butée (5) et, en maintenant la pression sur la partie de fixation (6), fabrication par coopération de formes du chevauchement (9) entre la partie de fixation (6) et la butée (5).

7. Méthode selon la revendication 6, **caractérisée en ce que** l'enfilage de la protection d'entrée (7) et de la partie de fixation (6) est mis en oeuvre au moyen d'un tampon élastique (11) agissant contre une butée (5) par laquelle le système de connexion modulaire est maintenu.

8. Méthode selon la revendication 7, **caractérisée en ce que** le chevauchement (9) est fabriqué au moyen d'un dispositif d'assemblage (10) externe et agit contre la partie de fixation (6) ou contre la butée (5).
